# EUROPÄISCHE PATENTSCHRIFT

(11) **EP 2 500 408 B1**
(45) Veröffentlichungstag und Bekanntmachung des Hinweises auf die Patenterteilung: **27.07.2016**
(21) Anmeldenummer: 12001819.7
(22) Anmeldetag: 15.03.2012
(51) Int. Cl.: C12C 3/00, C12C 11/11, C12C 13/00

(54) **ANLAGE UND VERFAHREN ZUM EINBRINGEN VON HOPFEN IN EINEN TANK**
ASSEMBLY AND METHOD FOR INSERTING HOPS INTO A TANK
INSTALLATION ET PROCÉDÉ D'ALIMENTATION EN HOUBLON DANS UN RÉSERVOIR

(30) Priorität: 17.03.2011 US 201113065255
(43) Veröffentlichungstag der Anmeldung: 19.09.2012
(73) Patentinhaber: ROLEC Prozess- und Brautechnik GmbH, 83339 Chieming (DE)
(72) Erfinder: Roth, Wolfgang, 89168 Niederstotzingen (DE)
(74) Vertreter: Castell, Klaus

(56) Entgegenhaltungen:
- DE-A1- 2 228 497
- DE-U1-202009 016 257
- GB-A- 470 283
- GB-A- 498 276
- GB-A- 2 020 693
- US-A- 3 979 527

## Beschreibung

Die Erfindung betrifft eine Anlage nach dem Oberbegriff des Patentanspruchs 1 und ein Verfahren zum Einbringen von Hopfen in einen Tank.

Eine gattungsgemäße Anlage ist aus der DE 22 28 497 A1 bekannt.

Hopfen wird üblicherweise der Würze in der Würzepfanne oder spätestens im Whirlpool zugegeben. Es ist jedoch bekannt auch nach dem Zusetzen der Hefe Hopfen dem Jungbier zuzugeben. Dazu wird ein großer Beutel mit Hopfen gefüllt und für einige Zeit in das Gefäß gehängt. Diese Methode ist im englischsprachigen Raum unter der Bezeichnung "dry hopping" gebräuchlich. Um das Einbringen von schädlichen Mikroorganismen mit dem Sack oder dem Hopfen zu vermeiden, wurde vorgeschlagen, den Sack samt Hopfen im Wasser auszukochen und dem Sud der Würze oder dem Jungbier zuzugeben.

Insbesondere bei der Verwendung von geschlossenen Gär- und Lagerbehältern ist eine derartige Hopfengabe kaum noch möglich, da das Einbringen des Hopfensackes und die Durchmischung von Jungbier und Hopfenaromen im geschlossenen Behälter erschwert sind.

Der Erfindung liegt daher die Aufgabe zu Grunde, eine Anlage und ein Verfahren zum Einbringen von Hopfen in einen Tank derart weiter zu entwickeln, dass eine einfach Hopfengabe auch bei geschlossenen Gär- und Lagertanks erfolgen kann.

Diese Aufgabe wird mit einer Anlage zum Einbringen von Hopfen in einen Tank gelöst, die die Merkmale des Patentanspruchs 1 aufweist.

Dies ermöglicht es außerhalb des Tanks Hopfen als Hopfenpellets, Hopfenextrakt, Hopfendollen oder Presshopfen in einen Hopfenvorlagebehälter zu geben. Mit dem Inertgas kann die Luft aus dem mit Hopfen gefüllten Behälter ausgetrieben und durch Inertgas wie CO₂ oder N₂ ersetzt werden. Der Hopfen gelangt über den am Boden angeordneten Ablauf in einen Bereich, in dem er mit Bier oder Jungbier vermischt wird und sofort weiter zu einem Mischgerät fließt.

Im Mischgerät werden die zu mischenden Komponenten Hopfen und Jungbier miteinander in Kontakt gebracht und intensiv miteinander vermengt. Hierzu werden die Mischkomponenten dem Gerät am Einlaufstutzen dosiert zugeführt, im Gerät miteinander innig vermischt, dispergiert bzw. homogenisiert und durch einen Auslaufstutzen aus dem Gerät ausgetragen. Die Scherwirkung des Mischgerätes führt zu einer Zerkleinerung des Hopfens und zu einer homogenen Vermischung mit dem Jungbier. Dadurch wird z.B. eine optimale Auflösung von Pellets erzielt.

Ein einfacher, kompakter Aufbau wird dadurch erzielt, dass das Mischgerät einen Motor aufweist und oberhalb des Mischgerätes der Hopfenvorlagebehälter und unterhalb des Mischgerätes der Motor angeordnet ist. Der Hopfen kann dadurch aus dem Hopfenvorlagebehälter in einen Bereich gelangen, in dem er mit dem Jungbier vermengt wird, um anschließend im Mischgerät intensiv zerkleinert und mit dem Jungbier vermengt zu werden. Ein Motor mit einer senkrechten Welle kann somit ohne Umlenkung das Mischgerät antreiben.

Um die Pellets dem Mischgerät ohne Fördereinrichtung zuzuleiten, wird vorgeschlagen, dass der Hopfenvorlagebehälter einen konischen Boden aufweist.

Damit das Inertgas von unten nach oben den Hopfen durchströmen kann, wird vorgeschlagen, dass der Hopfenvorlagebehälter in einem oberen Bereich einen Gasauslass aufweist.

Um zu vermeiden, dass das Mischgerät Luft oder Inertgas einsaugt, wird vorgeschlagen, ein Mischgerät zu verwenden, das nicht selbsttätig ansaugt.

Vorteilhaft ist es, wenn ein Mischgerät verwendet wird, das eine eigene Förderhöhe von über 10 m hat. Dadurch kann das Mischgerät auch als Pumpe eingesetzt werden, um das Gemenge aus Hopfen und Jungbier in einen Lagertank zu fördern. Da der Lagertank in der Regel unter Druck steht, ist eine Förderhöhe am Mischgerät von über 10 m sinnvoll.

Das Mischwerkzeug ist vorzugsweise mit Zähnen und Schlitzen versehen.

Verfahrensmäßig wird die Aufgabe mit einem Verfahren zum Einbringen von Hopfen in einen Tank gelöst, bei dem Hopfen in einen Hopfenvorlagebehälter gegeben wird, aus dem Hopfenvorlagebehälter mit Inertgas die Luft ausgetrieben wird und der Hopfen mit Bier oder Jungbier einem Mischgerät zugeführt wird.

Dabei ist vorzugsweise darauf zu achten, dass die Zufuhr so durchgeführt wird, dass kein Bier oder Jungbier in den Hopfenvorlagebehälter gelangt. Dies kann durch eine geeignete Auswahl der Drücke der zugeführten Medien erreicht werden, wobei insbesondere der Volumenstrom der Zufuhr des Jungbiers gesteuert sein sollte.

Das Bier oder Jungbier kann nach der Hopfenzugabe und dem Verschneiden der Filtration zugeführt werden. Vorteilhaft ist es, wenn das Bier oder Jungbier zusammen mit dem Hopfen einem Tank zugeführt wird, da dann im Tank der Hopfen sich absetzen kann und gegebenenfalls mit der Hefe ausgetragen werden kann.

Ein Ausführungsbeispiel der Erfindung ist in der Zeichnung dargestellt und wird im Folgenden anhand der Figuren näher erläutert. Es zeigt
Figur 1 eine schematische Darstellung einer Anlage mit einem Lagertank und
Figur 2 einen Schnitt durch das Mischgerät.

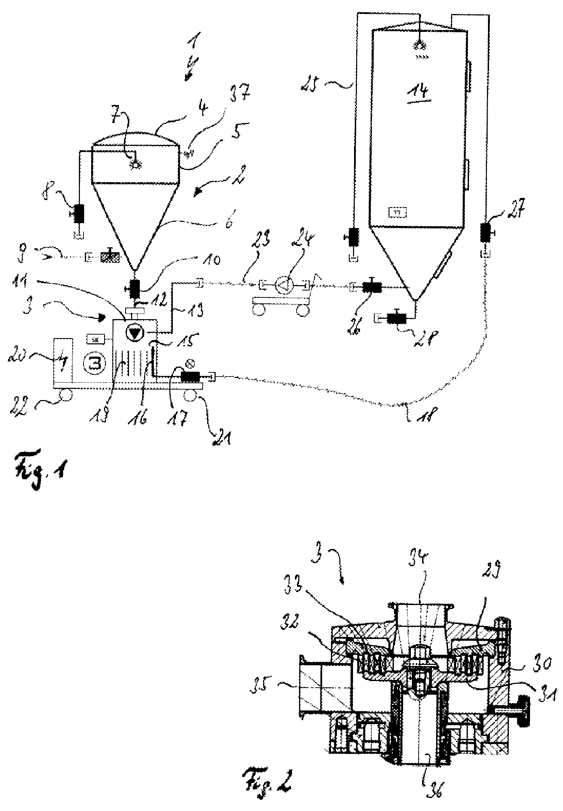

Die in Figur 1 gezeigte Anlage 1 besteht im Wesentlichen aus dem Hopfenvorlagebehälter 2 und dem Mischgerät 3. Der Hopfenvorlagebehälter 2 hat einen Deckel 4, eine Zarge 5 und einen konischen Auslauf 6. Der Deckel 4 ist luftdicht abschließbar und im oberen Bereich der Zarge 5 ist eine Reinigungseinrichtung 7 vorgesehen, die als CIP-Sprühkopf über das Ventil 8 mit Reinigungsflüssigkeit versorgt wird.

Im konischen Boden 6 ist eine Inertgaszuführung 9 und in der Spitze des konischen Bodens 6 ist ein Ablaufventil 10.

Unter diesem Ablaufventil und somit unter dem konischen Boden 6 ist das Mischgerät 3, das auf der oben angeordneten Zulaufseite 11 eine Zuleitung 12 für den Hopfen und eine Zuleitung 13 für Jungbier aus dem Lagertank 14 aufweist. Auf der Ablaufseite 15 ist eine Ableitung 16 für das Hopfen-Jungbier-Gemisch vorgesehen. Die Ablaufseite 16 ist über ein Ventil 17 und einen Schlauch 18 mit dem Tank 14 verbunden.

Unter dem Mischgerät 3 ist ein Motor 19 vorgesehen, der für den Antrieb des Mischgerätes sorgt und als Drehstrommotor ausgebildet ist. Der normale Arbeitspunkt des Drehstrommotors und des Mischgeräts liegt bei etwa 3.000 min⁻¹. Dies entspricht 50/60 Hz. Für die Energieversorgung ist ein Schaltkasten 20 vorgesehen.

Schaltkasten 20, Motor 19, Mischgerät 3 und Hopfenvorlagebehälter 2 sind auf einem Wagen 21 angeordnet, der Räder 22 aufweist und somit im Lagerkeller an verschiedene Tanks gefahren werden kann.

Die Zuleitung des Jungbiers zum Mischgerät erfolgt über eine Jungbierpumpe 24, die zwischen Lagertank 14 und Mischgerät 3 eingesetzt wird. Bei idealen Druckverhältnissen kann die Zuleitung des Jungbiers über einen Schlauch direkt vom Lagertank 14 erfolgen. Auch der Lagertank 14 hat eine Reinigungseinrichtung 25. Das Jungbier wird über ein Ventil 26 oder 28 entnommen, das Jungbier-Hopfen-Gemisch wird über das Ventil 27 oder auch 26, bzw. 28 zugeführt und das gelagerte Bier wird über das Ventil 26 bzw. 28 aus dem Tank 14 entnommen.

Der Mischer 3 hat einen Stator 29, der als Einlegeplatte in ein Gehäuse 30 eingesetzt ist. Relativ zu diesem Stator bewegt sich ein Rotor 31 mit dem Mischwerkzeug 32. Dieses Mischwerkzeug 32 hat Zähne und Schlitze, die mit entsprechenden Vertiefungen 33 im Stator 29 zusammenwirken.

Je nach eingesetztem Mischwerkzeug 32 ist das Mischgerät 3 durch einen Austausch des Stators für definierte Zerkleinerungsprofile einstellbar.

Im Ausführungsbeispiel des Mischgerätes 3 liegt der Zulauf 34 oben, der Ablauf 35 ist seitlich und vom darunterliegenden Motor 19 kommt die Welle 36, die den Rotor 31 mit dem Mischwerkzeug 32 antreibt.

Bei der Verwendung des Hopfenvorlagebehälters 2 wird zunächst der Deckel geöffnet, um Hopfen, vorzugsweise in Form von Pellets, in den Hopfenvorlagebehälter 2 zu geben. Anschließend wird der Deckel 4 luftdicht verschlossen und über die Inertgaszuführung 9 wird vom Konus ausgehend der Hopfenvorlagebehälter 2 mit CO₂ befüllt. Das schwerere CO₂ verdrängt die im Hopfenvorlagebehälter 2 vorhandene Luft, die durch den Gasauslass 37 den Hopfenvorlagebehälter 2 verlässt.

Anschließend wird das Auslaufventil 10 geöffnet, sodass der Hopfen aus dem Hopfenvorlagebehälter 2 zum Mischgerät 3 fließt. Dort wird der Hopfen mit dem Mischwerkzeug 32 zerkleinert und mit dem Jungbier vermischt. Anschließend verlässt er über den Auslass 35 das Mischgerät 3, um wieder dem Tank 14 zugeführt zu werden.

## Patentansprüche

1. Anlage (1) zum Einbringen von Hopfen in einen Tank
∘ mit einem Hopfenvorlagebehälter (2), der luftdicht abschließbar ist, eine Inertgaszuführung (9) und am Boden einen Ablauf aufweist, und
∘ mit einem Mischgerät (3), das auf der Zulaufseite (11) zwei Zuleitungen (12) und auf der Ablaufseite eine Ableitung aufweist,
∘ ***dadurch gekennzeichnet, dass*** die Inertgaszuführung des Hopfenvorlagebehälters am Boden vorgesehen ist und das Mischgerät (3) für eine Zerkleinerung geeignet ist und einen Stator (29) und als Rotor (31) ein Mischwerkzeug (32) aufweist.

2. Anlage nach Anspruch 1, ***dadurch gekennzeichnet, dass*** das Mischgerät (3) einen Motor (19) aufweist und oberhalb des Mischgerätes (3) der Hopfenvorlagebehälter (2) und unterhalb des Mischgerätes (3) der Motor (19) angeordnet ist.

3. Anlage nach einem der vorhergehenden Ansprüche, ***dadurch gekennzeichnet, dass*** der Hopfenvorlagebehälter (2) einen konischen Boden (6) aufweist.

4. Anlage nach einem der vorhergehenden Ansprüche, ***dadurch gekennzeichnet*, *dass*** der Hopfenvorlagebehälter (2) in einem oberen Bereich einen Gasauslass (37) aufweist.

5. Anlage nach einem der vorhergehenden Ansprüche, ***dadurch gekennzeichnet*, *dass*** das Mischgerät (3) nicht selbsttätig ansaugt.

6. Anlage nach einem der vorhergehenden Ansprüche, ***dadurch gekennzeichnet*, *dass*** das Mischgerät (3) eine eigene Förderhöhe von über 10 m hat.
Anlage nach einem der vorhergehenden Ansprüche, ***dadurch gekennzeichnet*, *dass*** das Mischgerät (3) ein Mischwerkzeug (32) mit Zähnen und Schlitzen aufweist.

7. Verfahren zum Einbringen von Hopfen in einen Tank, bei dem Hopfen in einen Hopfenvorlagebehälter (2) gegeben wird, aus dem Hopfenvorlagebehälter (2) mit Inertgas die Luft ausgetrieben wird und der Hopfen mit Bier oder Jungbier einem Mischgerät (3) zugeführt wird.

8. Verfahren nach Anspruch 8, ***dadurch gekennzeichnet, dass*** die Zufuhr so durchgeführt wird, dass kein Bier oder Jungbier in den Hopfenvorlagebehälter (2) gelangt.

9. Verfahren nach Anspruch 8 oder 9, ***dadurch gekennzeichnet, dass*** das Bier oder Jungbier zusammen mit dem Hopfen einem Tank (14) zugeführt wird.

## Claims

1. An installation (1) for introducing hops into a tank
∘ having a hop storage container (2), which can be closed in an air-tight manner and has an inert gas supply (9) and also has an outlet at the bottom, and
∘ having a mixing device (3), which has two feed lines (12) on the inlet side (11) and a discharge line on the outlet side,
∘ ***characterised in that*** the inert gas supply of the hop storage container is provided on the bottom, and the mixing device (3) is suitable for comminution and has a stator (29) and also has a mixing tool (32) as the rotor (31).

2. The installation according to Claim 1, ***characterised in that*** the mixing device (3) has a motor (19), and the hop storage container (2) is arranged above the mixing device (3), and the motor (19) is arranged below the mixing device (3).

3. The installation according to any one of the preceding claims, ***characterised in that*** the hop storage container (2) has a conical bottom (6).

4. The installation according to any one of the preceding claims, ***characterised in that*** the hop storage container (2) has a gas outlet (37) in an upper region.

5. The installation according to any one of the preceding claims, ***characterised in that*** the mixing device (3) does not automatically draw.

6. The installation according to any one of the preceding claims, ***characterised in that*** the mixing device (3) has a dedicated conveying level of over 10 m.
The installation according to any one of the preceding claims, ***characterised in that*** the mixing device (3) has a mixing tool (32) with teeth and slots.

7. A method for introducing hops into a tank, in which hops are poured into a hop storage container (2), the air is expelled from the hop storage container (2) with inert gas, and the hops are fed together with beer or green beer to a mixing device (3).

8. The method according to Claim 8, ***characterised in that*** the feed is carried out in such a manner that no beer or green beer passes into the hop storage container (2).

9. The method according to Claim 8 or 9, ***characterised in that*** the beer or green beer is fed together with the hops to a tank (14).

## Revendications

1. Installation (1) pour l'incorporation de houblon dans un réservoir, comportant
∘ un réservoir à houblon (2) qui peut être fermé hermétiquement à l'air, présentant une conduite d'alimentation en gaz inerte (9) et une évacuation au fond et
∘ un appareil de mélange (3) qui présente du côté arrivée (11) deux conduites d'alimentation (12) et une conduite d'évacuation côté sortie,
∘ ***caractérisée en ce que*** la conduite d'alimentation en gaz inerte du réservoir à houblon est prévue au fond et que l'appareil de mélange (3) convient pour un broyage et présente un stator (29) et un outil de mélange (32) faisant office de rotor (31).

2. Installation selon la revendication, 1, ***caractérisée en ce que*** l'appareil de mélange (3) présente un moteur (19) et que le réservoir à houblon (2) est disposé au-dessus de l'appareil de mélange (3) et que le moteur (19) est disposé en dessous de l'appareil de mélange (3).

3. Installation selon une des revendications précédentes, ***caractérisée en ce que*** le réservoir à houblon (2) présente un fond conique (6).

4. Installation selon une des revendications précédentes, ***caractérisée en ce que*** le réservoir à houblon (2) présente une sortie de gaz (37) dans une partie supérieure.

5. Installation selon une des revendications précédentes, ***caractérisée en ce que*** l'appareil de mélange (3) n'aspire pas automatiquement.

6. Installation selon une des revendications précédentes, ***caractérisée en ce que*** l'appareil de mélange (3) a une hauteur de convoyage spécifique de plus de 10 m.
Installation selon une des revendications précédentes, ***caractérisée en ce que*** l'appareil de mélange (3) présente un outil de mélange (32) pourvu de dents et de fentes.

7. Procédé d'incorporation de houblon dans un réservoir, dans lequel du houblon est versé dans un réservoir à houblon (2), que l'air est expulsé du réservoir à houblon (2) avec du gaz inerte et que le houblon est acheminé avec de la bière ou de la bière nouvelle vers un appareil de mélange (3).

8. Procédé selon la revendication 8, ***caractérisé en ce que*** l'acheminement est réalisé de manière à ce qu'il n'arrive pas de bière ou de bière nouvelle dans le réservoir à houblon (2).

9. Procédé selon la revendication 8 ou 9, ***caractérisé en ce que*** la bière ou la bière nouvelle est acheminée avec le houblon vers un réservoir (14).
